# EUROPEAN PATENT SPECIFICATION

(11) **EP 3 904 775 B1**
(45) Date of publication and mention of the grant of the patent: **10.05.2023**
(21) Application number: 18944974.7
(22) Date of filing: 26.12.2018
(51) Int. Cl.: F24F 11/30, F24F 7/007, F24F 11/00, F24F 11/64, F24F 11/74, F24F 110/70, F24F 110/10, F24F 7/08, F24F 120/10

(54) **VENTILATION CONTROL SYSTEM AND CARBON DIOXIDE CONCENTRATION ESTIMATION METHOD**
LÜFTUNGSREGELUNGSSYSTEM UND VERFAHREN ZUR SCHÄTZUNG DER KOHLENDIOXIDKONZENTRATION
SYSTÈME DE COMMANDE DE VENTILATION ET PROCÉDÉ D'ESTIMATION DE CONCENTRATION DE DIOXYDE DE CARBONE

(43) Date of publication of application: 03.11.2021
(73) Proprietor: Mitsubishi Electric Corporation, Tokyo 100-8310 (JP)
(72) Inventor: ASHINO, Masashi, Tokyo 100-8310 (JP)
(74) Representative: Mewburn Ellis LLP
(86) International application number: PCT/JP2018/047951
(87) International publication number: WO 2020/136774

(56) References cited:
- EP-A1- 2 527 753
- CN-A- 106 839 322
- JP-A- H06 109 313
- JP-A- 2010 255 900
- JP-A- 2013 047 579
- JP-A- 2014 115 019
- JP-A- 2015 143 594
- JP-A- 2018 048 749
- JP-A- 2018 048 749
- KR-B1- 101 204 328
- US-A1- 2011 276 183

## Description

### Field

The present invention relates to a ventilation control system that ventilates a space that needs ventilating, and to a carbon dioxide concentration estimation method.

### Background

Standards for indoor carbon dioxide content, that is, standards for carbon dioxide concentration are established by law for architecture including a building. Carbon dioxide is hereinafter referred to as CO₂. In order to meet this standard, it is necessary to change the ventilation amount in conformity with CO₂ concentration. To this end, a ventilation control system includes a blower to discharge indoor air to the outdoors and a CO₂ sensor to detect the indoor CO₂ concentration.

The ventilation control system disclosed in Patent Literature 1 includes a ventilation device, a human detecting sensor capable of detecting the presence or absence of a person, a CO₂ sensor capable of detecting the CO₂ concentration, and a control device. For the ventilation control system disclosed in Patent Literature 1, the ventilation device, the human detecting sensor, and the CO₂ sensor are installed in one space. The control device of the ventilation control system disclosed in Patent Literature 1 controls the ventilation device such that the ventilation amount of the ventilation device is switched on the basis of the output signal from the human detecting sensor when the output signal from the CO₂ sensor indicates that a CO₂ concentration is less than a threshold.

### Citation List

### Patent Literature

Patent Literature 1: Japanese Patent No. 5999353
Patent Literature 2: US2011/276183 discloses fresh air control device and algorithm for air handling units and terminal boxes
Patent Literature 3: KR101204328 discloses smart ventilation system and method for controlling smart ventilation
Patent Literature 4: JP2018/048749 discloses estimation device, estimation system, estimation method and estimation program
Patent Literature 5: EP2527753 discloses device and method for regulating a fresh air supply for a device for cooling, heating and/or ventilating a building

### Summary

### Technical Problem

For the ventilation control system disclosed in Patent Literature 1, it is required that the ventilation device, the human detecting sensor, and the CO₂ sensor be installed in each room. In a case in which a single ventilation device is required to ventilate multiple rooms with a CO₂ sensor installed in one of the multiple rooms or at an inlet port of the ventilation device, it is not possible to monitor the CO₂ concentration in each room. As a result, the CO₂ concentration can increase due to insufficient ventilation.

The present invention has been made in view of the foregoing, and it is an object of the present invention to provide a ventilation control system capable of ventilating multiple rooms, using a single ventilation device while preventing the CO₂ concentration from increasing due to insufficient ventilation.

### Solution to Problem

To solve the problem and achieve the object described above, the present invention is directed to a ventilation control system as set forth in claim 1. Also provided is a carbon dioxide concentration estimation method as set forth in claim 13.

### Advantageous Effects of Invention

The ventilation control system according to the present invention is advantageous in being capable of ventilating multiple rooms using the single ventilation device while preventing the CO₂ concentration from increasing due to the insufficient ventilation.

### Brief Description of Drawings

FIG. 1 is a diagram illustrating wiring of a ventilation control system according to a first embodiment of the present invention.
FIG. 2 is a diagram illustrating piping of the ventilation control system according to the first embodiment.
FIG. 3 is a diagram illustrating a configuration of the ventilation device of the ventilation control system according to the first embodiment.
FIG. 4 is a functional block diagram of the control device of the ventilation control system according to the first embodiment.
FIG. 5 is a flowchart illustrating a process of a carbon dioxide concentration estimation method performed by the ventilation control system according to the first embodiment.
FIG. 6 is a diagram illustrating a configuration in which the functionality of the control unit of the ventilation control system according to the first embodiment is implemented in hardware.
FIG. 7 is a diagram illustrating a configuration in which the functionality of the control unit of the ventilation control system according to the first embodiment is implemented in software.

### Description of Embodiments

A ventilation control system and a carbon dioxide concentration estimation method according to an embodiment of the present invention will be described in detail below with reference to the drawings. Note that this embodiment is not intended to limit the scope of this invention.

### First Embodiment.

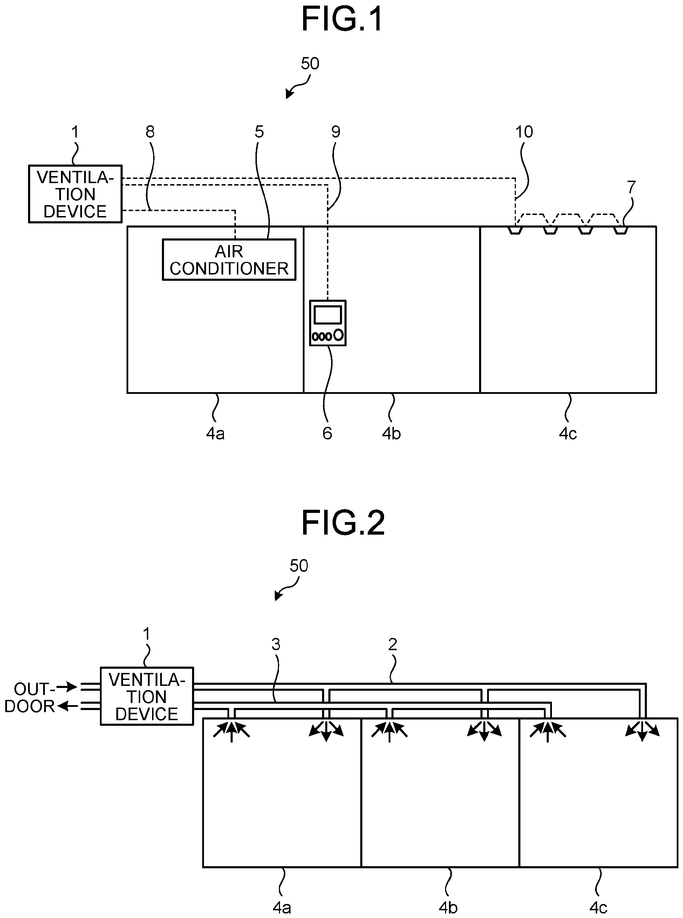

FIG. 1 is a diagram illustrating wiring of a ventilation control system according to a first embodiment of the present invention. A ventilation control system 50 according to the first embodiment includes a ventilation device 1, an air conditioner 5, a remote controller 6, and lighting equipment 7. The air conditioner 5 for conditioning the indoor temperature is installed in a room 4a. The remote controller 6 for controlling the air conditioner 5 is provided in a room 4b. In addition, the lighting equipment 7 is installed in a room 4c. The ventilation device 1 is connected to the air conditioner 5 via a connection line 8. The ventilation device 1 is also connected to the remote controller 6 via a connection line 9. The ventilation device 1 is further connected to the lighting equipment 7 via a connection line 10.

FIG. 2 is a diagram illustrating piping of the ventilation control system according to the first embodiment. In the ventilation control system 50 according to the first embodiment, the ventilation device 1 is connected to the rooms 4a, 4b, and 4c by means of an air supply duct 2 for taking in fresh outdoor air and supplying the outdoor air to the multiple rooms 4a, 4b, and 4c. The ventilation device 1 is connected to the rooms 4a, 4b, and 4c also by means of an air discharge duct 3 for taking in air in the rooms 4a, 4b, and 4c and discharging the air to the outdoors.

The air conditioner 5 includes a human detecting sensor installed therein. The human detecting sensor is human detection means for detecting the presence or absence of a person in the room. On the basis of presence-absence information detected by the human detecting sensor, the air conditioner 5 is capable of stopping the operation of the air conditioner 5 or controlling the set temperature of the air conditioner 5. For example, the air conditioner 5 can be controlled, during cooling operation, such that the cooling operation stops or the set temperature of cooling is raised by a certain temperature to thereby save energy when the presence-absence information has changed to "unoccupied" for a certain time period.

The presence-absence information detected by the human detecting sensor included in the air conditioner 5 is transmitted from the air conditioner 5 to the ventilation device 1 via the connection line 8. The presence-absence information is converted into a communication signal or into a voltage signal, and is transmitted on the connection line 8. Note that the ventilation device 1 and the air conditioner 5 may be connected to each other via wireless communication.

The remote controller 6 includes a human detecting sensor installed therein, which sensor is human detection means for detecting the presence or absence of a person in the room. With the presence-absence information detected by the human detecting sensor, the remote controller 6 is capable of stopping an operation of a device such as the air conditioner 5 or controlling the set temperature of the device. For example, the remote controller 6 can control the air conditioner 5 such that, during heating operation, the air conditioner 5 stops or the set temperature of heating of the air conditioner 5 is lowered by a certain temperature to thereby save energy when the presence-absence information has changed to "unoccupied" for a certain time period.

The presence-absence information detected by the human detecting sensor included in the remote controller 6 is transmitted from the remote controller 6 to the ventilation device 1 via the connection line 9. The presence-absence information is converted into a communication signal or into a voltage signal, and is transmitted on the connection line 9. Note that the ventilation device 1 and the remote controller 6 may be connected to each other via wireless communication.

The lighting equipment 7 includes a human detecting sensor installed therein, which sensor is human detection means for detecting the presence or absence of a person in the room. With the presence-absence information detected by the human detecting sensor, the lighting equipment 7 is capable of turning on/off the lighting equipment 7 or controlling the illuminance of the lighting equipment 7. For example, when the light is in an Off state during which the presence-absence information changes to "occupied", the light can be turned on. In addition, when the light is in an On state during which the presence-absence information has changed to "unoccupied" for a certain time period, the light can be turned off.

The presence-absence information detected by the human detecting sensor installed in the lighting equipment 7 is transmitted from the lighting equipment 7 to the ventilation device 1 via the connection line 10. The presence-absence information is converted into a communication signal or into a voltage signal, and is transmitted on the connection line 10. Note that the ventilation device 1 and the lighting equipment 7 may be connected to each other via wireless communication.

A device including human detection means capable of detecting the presence of a person may also be, for example, a security system that manages people entering and leaving a building or the rooms 4a, 4b, and 4c, using a card key. The security system and the ventilation device 1 are connected to each other via wired or wireless communication, thereby allowing entering-leaving information held by the security system to be transmitted from the security system to the ventilation device 1.

Note that instead of receiving the presence-absence information from a device including a human detecting sensor or a card reader, a separate human detecting sensor can be installed in each of the rooms 4a, 4b, and 4c to enable the ventilation device 1 to collect the presence-absence information directly from the human detecting sensors. In addition, any device capable of detecting the presence of a person can be used as a human detecting sensor.

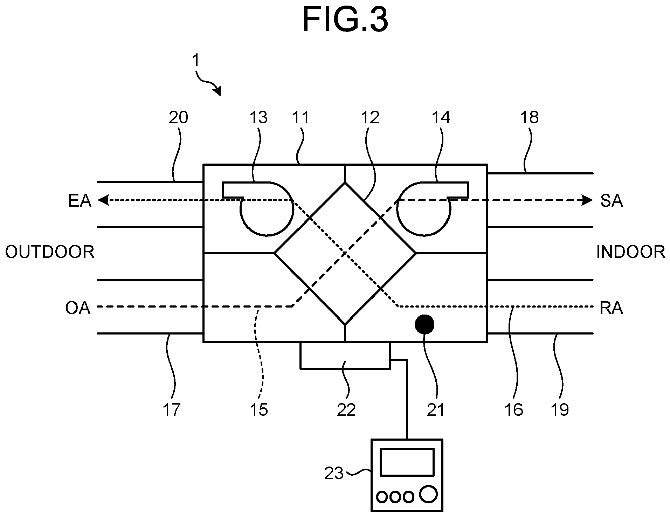

FIG. 3 is a diagram illustrating a configuration of the ventilation device of the ventilation control system according to the first embodiment. The ventilation device 1 includes a heat exchanger 12, an air discharge blower 13, and an air supply blower 14 all of which are disposed in a body housing 11. The air supply blower 14 is disposed in a supply airway 15, and supplies air from an outdoor-side inlet OA through the heat exchanger 12 to an indoor-side outlet SA provided in each of the multiple rooms. The air discharge blower 13 is disposed in a discharge airway 16, and discharges air from an indoor-side inlet RA provided in each of the multiple rooms through the heat exchanger 12 to an outdoor-side outlet EA. The ventilation device 1 uses the heat exchanger 12 to effect heat exchange between supplied air and discharged air.

The outdoor-side inlet OA is connected to the ventilation device 1 via an outdoor-side duct 17. The ventilation device 1 is connected to the multiple indoor-side outlets SA via a supply-side duct 18. The multiple indoor-side inlets RA are connected to the ventilation device 1 via an indoor-side duct 19. The ventilation device 1 is connected to the outdoor-side outlet EA via a discharge-side duct 20. Although omitted in FIG. 3, the supply-side duct 18 branches at some point into connection to the multiple indoor-side outlets SA. Similarly, although omitted in FIG. 3, the indoor-side duct 19 branches at some point into connection to the multiple indoor-side inlets RA. The outdoor-side duct 17 and the supply-side duct 18 are each the air supply duct 2. The indoor-side duct 19 and the discharge-side duct 20 are each the air discharge duct 3.

A CO₂ sensor 21 for measuring CO₂ concentration in the discharge airway 16 is disposed in the discharge airway 16 inside the ventilation device 1. The CO₂ concentration in the discharge airway 16 is the CO₂ concentration of mixed air that is a mixture of the exhaust air from the rooms 4a, 4b, and 4c. That is, the CO₂ concentration in the discharge airway 16 represents the total volume of CO₂ gas contained in the total volume of the exhaust air discharged from the rooms 4a, 4b, and 4c.

The air discharge blower 13 and the air supply blower 14 are independently driven and controlled by a control device 22. The control device 22 is connected to the CO₂ sensor 21, and can thus receive information on the CO₂ concentration measured by the CO₂ sensor 21. An operation device 23 connected to the control device 22 operates the ventilation device 1, and checks a state of the ventilation device 1.

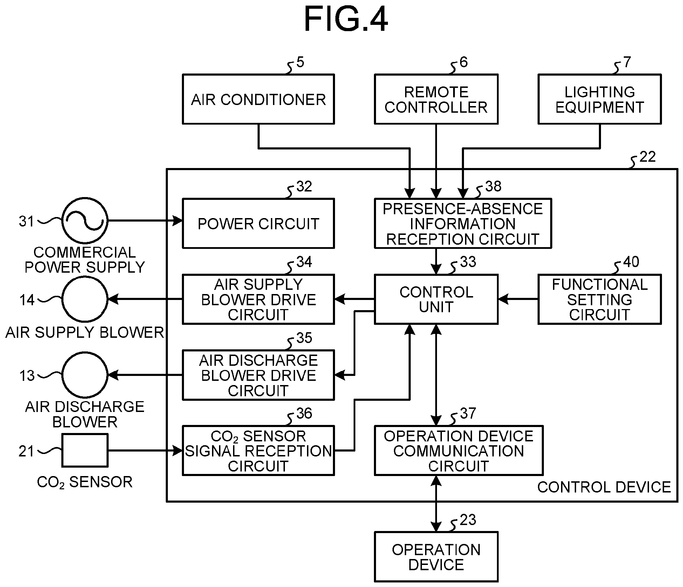

FIG. 4 is a functional block diagram of the control device of the ventilation control system according to the first embodiment. As illustrated in FIG. 4, the control device 22 includes a power circuit 32 connected to a commercial power supply 31. The power circuit 32 supplies electrical power to a control unit 33 and each circuit.

The ventilation device 1 is connected with the operation device 23. The operation device 23 is capable of displaying information such as an operating state of the ventilation device, the operational air flow rate of the air discharge blower 13, and the operational air flow rate of the air supply blower 14. The operation device 23 is also capable of stopping the operation of the ventilation device, and setting operating notches of the air discharge blower 13 and of the air supply blower 14. The operation device 23 is connected to the control unit 33 via an operation device communication circuit 37.

The CO₂ sensor 21 disposed in the discharge airway 16 measures the CO₂ concentration, and outputs a CO₂ concentration signal. The CO₂ sensor 21 is connected to the control unit 33 via a CO₂ sensor signal reception circuit 36 for receiving the CO₂ concentration signal.

The control device 22 also includes a functional setting circuit 40 having, for example, a switch for setting the operating notch of the air discharge blower 13 or of the air supply blower 14 on the basis of the presence-absence information or the CO₂ concentration.

The control unit 33 is capable of receiving signals from the CO₂ sensor signal reception circuit 36, the operation device communication circuit 37, a presence-absence information reception circuit 38, and the functional setting circuit 40, outputting a drive command to an air supply blower drive circuit 34 to drive the air supply blower 14, and outputting a drive command to an air discharge blower drive circuit 35 to drive the air discharge blower 13.

In accordance with the CO₂ concentration detected by the CO₂ sensor 21 or the CO₂ concentration of each of the rooms 4a, 4b, and 4c, the control unit 33 outputs a drive command to the air supply blower drive circuit 34 to drive the air supply blower 14 and outputs a drive command to the air discharge blower drive circuit 35 to drive the air discharge blower 13. The control unit 33 operates the air discharge blower 13 and the air supply blower 14 in a high power mode when the highest CO₂ concentration of a room among the rooms 4a, 4b, 4c is equal to or greater than 800 ppm, the highest CO₂ concentration being highest of CO₂ concentrations of the rooms 4a, 4b, and 4c. The control unit 33 operates the air discharge blower 13 and the air supply blower 14 in a low power mode when the highest CO₂ concentration of a room among the rooms 4a, 4b, 4c is equal to or greater than 500 ppm and less than 800 ppm, the highest CO₂ concentration being highest of CO₂ concentrations of the rooms 4a, 4b, and 4c. The control unit 33 operates the air discharge blower 13 and the air supply blower 14 in a very low power mode when the highest CO₂ concentration of a room among the rooms 4a, 4b, 4c is less than 500 ppm, the highest CO₂ concentration being highest of CO₂ concentrations of the rooms 4a, 4b, and 4c.

A process performed by the control unit 33 for estimating the CO₂ concentration of each of the rooms 4a, 4b, and 4c will next be described. The example is described below on the assumption that the presence-absence information on the room 4a is "occupied", the presence-absence information on the room 4b is "unoccupied", and the presence-absence information on the room 4c is "occupied", and that the CO₂ concentration in the discharge airway 16 is 800 ppm.

Assuming that the volume of air discharged from each of the rooms 4a, 4b, and 4c per hour is 100 m³/h, the exhaust air discharged to the outdoors by the ventilation device 1 will be 300 m³/h, which is the sum of the volumes of air discharged from the rooms 4a, 4b, and 4c per hour. Accordingly, the amount of CO₂ gas contained in the exhaust air discharged to the outdoors by the ventilation device 1 is 300[m³/h]×800 [ppm]=300[m³/h]×800=1000000=0.24[m³/h].

Next, the amount of CO₂ gas contained in the exhaust air in each of the rooms 4a, 4b, and 4c is calculated. Since the presence-absence information on the room 4b represents "unoccupied", there are no person in the room 4b. Since the room 4b is ventilated by the ventilation device 1 in spite of the absence of room occupants in the room 4b, the CO₂ concentration of the exhaust air becomes identical to the CO₂ concentration in the outdoor air. Since the typical CO₂ concentration in the air is about 400 ppm, the amount of CO₂ gas contained in the exhaust air from the room 4b is 100[m³/h]×400[ppm]=100[m³/h]×400=1000000=0.04[m³/h].

Since the presence-absence information on each of the room 4a and the room 4c represents "occupied", there are people in the room 4a and the room 4c. In the presence of a room occupant, air exhaled from the person makes the indoor CO₂ concentration higher than the CO₂ concentration in the air. Thus, the CO₂ concentrations of the rooms 4a and 4c are estimated from "the amount of CO₂ gas contained in the exhaust air discharged through the ventilation device 1" and "the amount of CO₂ gas contained in the exhaust air discharged from the room 4b".

First, assume that the number of people present in the room 4a is the same as that in the room 4c, and that the amount of CO₂ gas contained in the exhaust air discharged from the room 4a is the same as that from the room 4c. Then, the amount of CO₂ gas contained in the exhaust air discharged from the room 4a is ("the amount of CO₂ gas contained in the exhaust air discharged through the ventilation device 1"-"the amount of CO₂ gas contained in the exhaust air discharged from the room 4b")÷"the sum of the volumes of the exhaust air discharged from the occupied rooms 4a and 4c "×"the volume of the exhaust air discharged from the room 4a"=(0.24-0.04)÷200×100=0.1[m³/h]. Thus, the CO₂ concentration is calculated: CO₂ concentration=amount of CO₂ gas ÷ volume of the exhaust air=0.1[m³/h]=100[m³/h]=1000 ppm. Similarly, the CO₂ concentration of the room 4c is also 1000 ppm.

Since the CO₂ concentrations of the rooms 4a and 4c are 1000 ppm, the control device 22 operates the air supply blower 14 and the air discharge blower 13 in a high power mode.

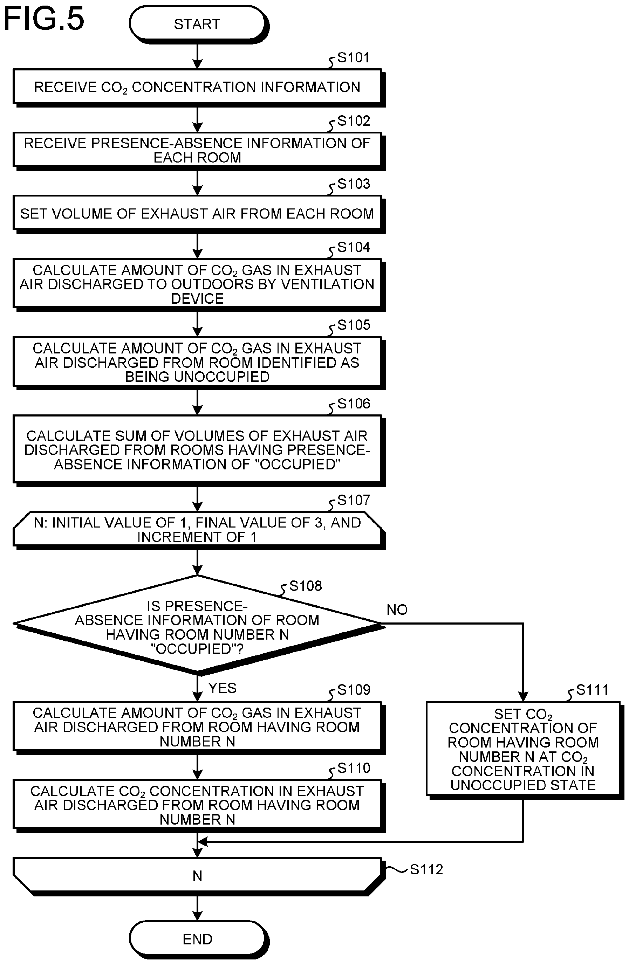

FIG. 5 is a flowchart illustrating a process of a carbon dioxide concentration estimation method performed by the ventilation control system according to the first embodiment. The CO₂ concentration estimation process starts with step S101 at which the control device 22 receives CO₂ concentration information from the CO₂ sensor 21 disposed in the discharge airway 16. Note that the values of the CO₂ concentration received during a certain time period in the past may be averaged to thereby remove or prevent an anomaly caused by noise or the like. That is, the CO₂ concentration measured by the CO₂ sensor 21 may be an average value of multiple measured values. The control device 22 performs the subsequent part of the CO₂ concentration estimation process for each room, using the CO₂ concentration information obtained at step S101. When the CO₂ concentration obtained at step S101 is an anomaly, the subsequent part of the estimation process may be canceled determining that the sensor is anomalous though not illustrated in FIG. 5. Examples of anomaly include 0 ppm indicating that no CO₂ has been detected, and a value that is one or more orders of magnitude higher than 400 ppm that is a typical CO₂ concentration in the air.

At step S102, the control device 22 receives presence-absence information from the air conditioner 5, the remote controller 6, and the lighting equipment 7 installed in the rooms 4a, 4b, and 4c, respectively. The control device 22 performs the subsequent part of the CO₂ concentration estimation process for the rooms 4a, 4b, and 4c, using the presence-absence information obtained at step S102. Note that the indoor CO₂ gas is not discharged immediately after the presence-absence information on one of the rooms 4a, 4b, and 4c changes from "occupied" to "unoccupied", in which case a large error may occur between the estimated value and the actual value. To prevent such a large error, thus, the CO₂ concentration estimation process for the rooms 4a, 4b, and 4c may be performed regarding the presence-absence information as remaining "occupied" for a certain time period after the change in the presence-absence information from "occupied" to "unoccupied". That is, the CO₂ concentration estimation process for the rooms 4a, 4b, and 4c may be performed regarding room occupants as being present for a certain time period after no room occupant has been detected.

At step S103, the control device 22 sets the volume of the exhaust air to be discharged by the ventilation device 1 from each of the rooms 4a, 4b, and 4c. In a case in which the rooms 4a, 4b, and 4c have the same heights and the same floor areas, the volumes of the exhaust air may be deemed as the same as one another. Alternatively, in a case in which the rooms 4a, 4b, and 4c differ from one another in at least one of the height and the floor area, the volume of the exhaust air may be individually set for the rooms 4a, 4b, and 4c. The volumes of the exhaust air to be discharged from the rooms 4a, 4b, and 4c may be set by the functional setting circuit 40. In addition, the volumes of the exhaust air to be discharged from the rooms 4a, 4b, and 4c may be set in correspondence with the cooling or the heating capacity of the air conditioner 5. That is, the control device 22 may receive information on the cooling capacity or the heating capacity from the air conditioner 5, and then set the volumes of the exhaust air on the basis of the received information.

For a building having a reinforced concrete structure, the air conditioner 5 having a cooling capacity of 5.6 kW can typically cool a room having an area of about 32 m². As for Japan, Act on Maintenance of Sanitation in Buildings provides for a required ventilation amount of 25 to 30 m³/h per person in a case where the number of room occupants per 1 m² is 0.2. In compliance with this provision, a required ventilation amount per 1 kW of the cooling capacity of the air conditioner 5 is 32[m²] ÷ 5.6[kW]×0.2[person/m²]×30[m³/h/person]=34.3[m³/h].

Alternatively, the volumes of the exhaust air to be discharged from the rooms 4a, 4b, and 4c may be set in correspondence to the power consumption of lighting equipment installed in each room. That is, the control device 22 may receive information on the power consumption from the lighting equipment installed in each room, and then set the volumes of the exhaust air on the basis of the received information. A room having a floor area of 16 m² typically needs a fluorescent lamp of about 100 W. Thus, a required ventilation amount per 1 W of lighting equipment is 16[m²]÷100[W]×0.2[person/m²]×30[m³/h/person]=0.96[m³/h]. The control device 22 performs the subsequent part of the CO₂ concentration estimation process for each room, using the volume of the exhaust air discharged from each room obtained at step S103.

At step S104, the control device 22 calculates the amount of CO₂ gas in the exhaust air discharged to the outdoors by the ventilation device 1. The amount of CO₂ gas in the exhaust air discharged by the ventilation device 1 is calculated by multiplication of "the volume of the exhaust air that the ventilation device 1 can discharge" by "the CO₂ concentration obtained at step S101".

At step S105, the control device 22 calculates the amount of CO₂ gas in the exhaust air discharged from the room determined to be unoccupied from the presence-absence information on each of the rooms 4a, 4b, and 4c obtained at step S102. The amount of CO₂ gas in the exhaust air discharged from the room determined to be unoccupied is calculated by multiplication of "the CO₂ concentration in the air" by "the volume of the exhaust air discharged from the room, set at step S103".

Note that the CO₂ concentration in the air may be set to any value, using the functional setting circuit 40 in view of a possible situation where a building is located in an environment, for example, along a major road having a CO₂ concentration higher than a normal value. In addition, the CO₂ concentration at the time when all the rooms have been unoccupied for a time period during which the air in the rooms can be replaced with fresh air may be regarded as the CO₂ concentration in the ambient air.

At step S106, the control device 22 calculates the sum of the volumes of the exhaust air discharged from the rooms having the presence-absence information representing "occupied", among all the rooms. The sum of the capacities of the exhaust air discharged from the occupied rooms is calculated using the volume of the exhaust air discharged from each of the rooms obtained at step S103.

Next, to calculate the amount of CO₂ gas in the exhaust air discharged from each of the rooms determined to be occupied, the process from step S107 to step Sill is performed on a room-by-room basis. In this example, each room is assigned a room number N such that the room 4a is assigned N=1, the room 4b is assigned N=2, and the room 4c is assigned N=3. In the repeat process, at first, N is 1. The repeat process proceeds from step S107 to step S112, after which N is incremented by one. The processes from step S107 to step S112 are subsequently performed again. When the repeat process with N equal to 3 proceeds to step S112, the process terminates, thereby terminating the process of estimating the CO₂ concentration. That is, the repeat process is performed using the variable N from an initial value of 1 to a final value of 3, and an increment of 1.

After the start of the repeat process at step S107, the control device 22 determines, at step S108, whether the presence-absence information on the room having the room number N is "occupied". If the presence-absence information on the room having the room number N is "occupied", that is, Yes at step S108, the process proceeds to step S109.

At step S109, the control device 22 calculates the amount of CO₂ gas in the exhaust air discharged from the room having the room number N that is occupied. Note that the amount of CO₂ gas in the exhaust air discharged from the room having the room number N is calculated by: subtracting the total value of "the amount(s) of CO₂ gas in the exhaust air discharged from the unoccupied room(s) calculated at step S105" from "the amount of CO₂ gas in the exhaust air discharged to the outdoors by the ventilation device 1 calculated at step S104"; dividing the resulting difference by "the sum of the volumes of the exhaust air discharged from the occupied rooms calculated at step S106"; and multiplying the resulting quotient by "the volume of the exhaust air to be discharged from the room that has been set at step S103".

At step S110, the control device 22 calculates the CO₂ concentration in the exhaust air discharged from the room having the room number N. The CO₂ concentration in the exhaust air discharged from the room having the room number N is calculated by dividing "the amount of CO₂ gas in the exhaust air discharged from the room calculated at step S109" by "the volume of the exhaust air to be discharged from the room that has been set at step S103".

When the presence-absence information on the room having the room number N is "unoccupied", that is, No at step S108, the control device 22 sets, at step Sill, the CO₂ concentration of the room having the room number N to the CO₂ concentration in an unoccupied state. The CO₂ concentration in an unoccupied state is set to the same value as that of the CO₂ concentration in the ambient air. Note that when no occupant has been detected for a certain time period for all the rooms 4a, 4b, and 4c, the CO₂ concentration of each of the rooms 4a, 4b, and 4c may be estimated to be the CO₂ concentration measured by the CO₂ sensor 21.

When the process for the room having the room number N is complete at step S112, N is incremented by one, after which the process restarts from step S107. Alternatively, when N reaches the final value, the repeat process terminates.

After the completion of the CO₂ concentration estimation process for all the rooms, such processes not illustrated as controlling the air discharge blower 13 and the air supply blower 14 are performed. The CO₂ concentration estimation process is repeatedly performed after these processes.

The CO₂ concentration of each room cannot be detected only by the CO₂ sensor 21 disposed in the discharge airway 16 of the ventilation device 1. However, performing the foregoing operation in combination with the human detecting sensor installed in each room enables estimating the CO₂ concentration of each room. This can prevent the CO₂ concentration in a particular room from increasing due to insufficient ventilation.

Although the foregoing description is made on the assumption that the human detecting sensors are installed in the air conditioner 5, the remote controller 6, and the lighting equipment 7, the human detecting sensors may be installed in the rooms separately from the air conditioner 5, the remote controller 6, and the lighting equipment 7.

The functionality of the control unit 33 of the ventilation control system 50 according to the first embodiment described above is implemented in a processing circuitry. The processing circuitry may be a dedicated hardware element or a processing unit that executes a program stored in a memory device.

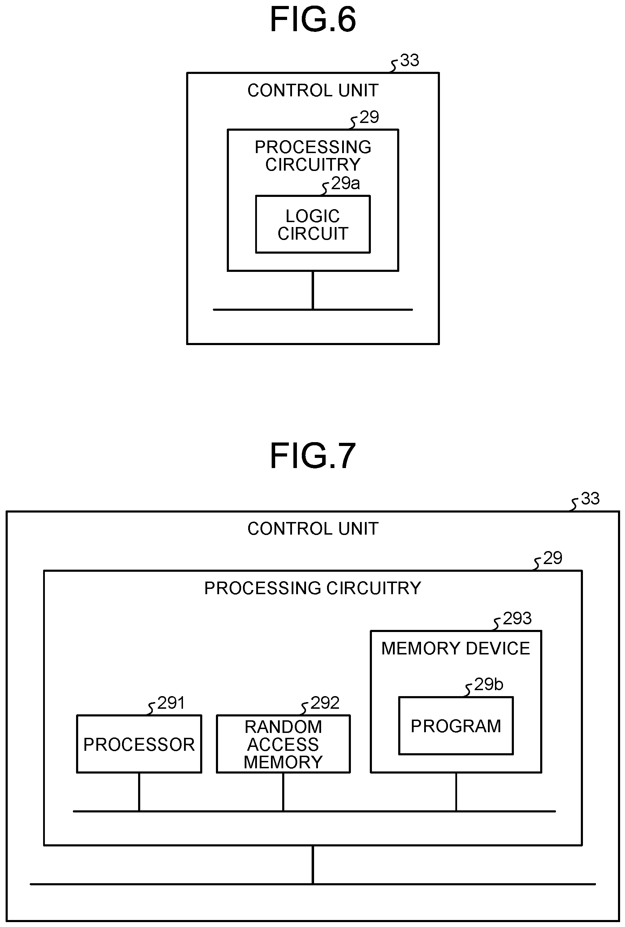

In a case in which the processing circuitry is a dedicated hardware element, the processing circuitry may be a single circuit, a set of multiple circuits, a programmed processor, a parallel programmed processor, an application specific integrated circuit, a field programmable gate array, or a combination thereof. FIG. 6 is a diagram illustrating a configuration in which the functionality of the control unit of the ventilation control system according to the first embodiment is implemented in hardware. A processing circuitry 29 incorporates therein a logic circuit 29a that implements the functionality of the control unit 33.

In a case in which the processing circuitry 29 is a processing unit, the functionality of the control unit 33 is implemented in software, firmware, or a combination of software and firmware.

FIG. 7 is a diagram illustrating a configuration in which the functionality of the control unit of the ventilation control system according to the first embodiment is implemented in software. The processing circuitry 29 includes a processor 291 that executes a program 29b, a random access memory 292 used for a work area by the processor 291, and a memory device 293 for storing the program 29b. The functionality of the control unit 33 is implemented by the processor 291 by expanding the program 29b stored in the memory device 293 on the random access memory 292 and executing the program 29b. The software or firmware is described in a program language, and is stored in the memory device 293. One example of the processor 291 is, but not limited to, a central processing unit. The memory device 293 may be a semiconductor memory such as a random access memory (RAM), a read-only memory (ROM), a flash memory, an erasable programmable read-only memory (EPROM), or an electrically erasable programmable read-only memory (EEPROM) (registered trademark). The semiconductor memory may be a non-volatile memory or a volatile memory. The memory device 293 may alternatively be a magnetic disk, a flexible disk, an optical disk, a compact disc, a MiniDisc, or a digital versatile disc (DVD), rather than a semiconductor memory. Note that the processor 291 may output and store data such as a computing result to and in the memory device 293, or may store such data in an auxiliary memory device (not illustrated) via the random access memory 292. Integration of the processor 291, the random access memory 292, and the memory device 293 on a single chip enables the functionality of the control unit 33 to be implemented in a microcomputer.

The processing circuitry 29 implements the functionality of the control unit 33 by reading and executing the program 29b stored in the memory device 293. It can also be said that the program 29b causes a computer to perform a procedure and a method for implementing the functionality of the control unit 33.

Note that the processing circuitry 29 may implement the functionality of the control unit 33 partially in a dedicated hardware element and partially in software or firmware.

As described above, the processing circuitry 29 can implement the foregoing functionality in hardware, software, firmware, or a combination thereof.

The configurations described in the foregoing embodiment are merely examples of various aspects of the present invention. These configurations may be combined with a known other technology that includes means for detecting another type of presence-absence information such as presence-absence information generated through room entry-exit management, and moreover, a part of the configurations may be omitted and/or modified without departing from the spirit of the present invention.

The foregoing embodiment has been described as to the ventilation control system 50, which estimates the CO₂ concentration of each of the rooms 4a, 4b, and 4c from the CO₂ concentration in the ventilation device 1, the presence-absence information on each of the rooms 4a, 4b, and 4c, and the capacity information on the exhaust air from each of the rooms 4a, 4b, and 4c. The procedure described herein is applicable as a carbon dioxide concentration estimation method in various occasions, and is effective in applications other than ventilation control.

### Reference Signs List

1 ventilation device; 2 air supply duct; 3 air discharge duct; 4a, 4b, 4c room; 5 air conditioner; 6 remote controller; 7 lighting equipment; 8, 9, 10 connection line; 11 body housing; 12 heat exchanger; 13 air discharge blower; 14 air supply blower; 15 supply airway; 16 discharge airway; 17 outdoor-side duct; 18 supply-side duct; 19 indoor-side duct; 20 discharge-side duct; 21 CO₂ sensor; 22 control device; 23 operation device; 29 processing circuitry; 29a logic circuit; 29b program; 31 commercial power supply; 32 power circuit; 33 control unit; 34 air supply blower drive circuit; 35 air discharge blower drive circuit; 36 CO₂ sensor signal reception circuit; 37 operation device communication circuit; 38 presence-absence information reception circuit; 40 functional setting circuit; 50 ventilation control system; 291 processor; 292 random access memory; 293 memory device.

## Claims

1. A ventilation control system (50) comprising:
a ventilation device (1) operable to ventilate a plurality of rooms (4a,4b,4c), the ventilation device including a CO₂ sensor (21) operable to measure a CO₂ concentration in exhaust air discharged from the plurality of rooms; and
a plurality of human detection means each installed in a corresponding one of the plurality of rooms and operable to detect presence of a room occupant, wherein
the ventilation device includes a control device (22) **characterized in that** the control device (22) is configured to estimate a CO₂ concentration of each of the plurality of rooms on a basis of the CO₂ concentration measured by the CO₂ sensor, a volume of exhaust air discharged from each room of the plurality of rooms, and detection results provided by the plurality of human detection means.

2. The ventilation control system according to claim 1, wherein the human detection means is a human detecting sensor or a device including a human detecting sensor.

3. The ventilation control system according to claim 1 or 2, wherein the control device (22) is configured to estimate the CO₂ concentration of each of the plurality of rooms (4a, 4b, 4c), regarding a room occupant as being present for a certain time period after no room occupant has been detected by the human detection means.

4. The ventilation control system according to any one of claims 1 to 3, wherein the CO₂ concentration measured by the CO₂ sensor (21) is an average value of a plurality of measured CO₂ concentration values.

5. The ventilation control system according to any one of claims 1 to 4, wherein the control device (22) is configured to estimate that a CO₂ concentration of a room for which the human detection means detects no room occupant is an outdoor CO₂ concentration.

6. The ventilation control system according to any one of claims 1 to 4, wherein a CO₂ concentration of a room (4b) for which the human detection means detects no room occupant is estimated to be a preset CO₂ concentration.

7. The ventilation control system according to any one of claims 1 to 4, wherein the control device (22) is configured to estimate the CO₂ concentration of each of the plurality of rooms (4a, 4b, 4a) to be the CO₂ concentration measured by the CO₂ sensor (21) when no room occupant has been detected by the human detection means for a certain time period in all of the plurality of rooms.

8. The ventilation control system according to any one of claims 1 to 7, wherein the control device (22) is configured to estimate the CO₂ concentrations of the plurality of rooms on the basis of: a preset value of the volume of exhaust air discharged from each of the plurality of rooms (4a, 4b, 4c); the CO₂ concentration measured by the CO₂ sensor (21); and the detection results provided by the human detection means.

9. The ventilation control system according to any one of claims 1 to 7, wherein the control device (22) is configured to receive information from an electric device installed in each of the plurality of rooms (4a, 4b, 4c), and is configured to estimate the CO₂ concentration of each of the plurality of rooms on the basis of: the volume of exhaust air discharged from each room of the plurality of rooms, the volume of exhaust air being estimated on the basis of the received information; the CO₂ concentration measured by the CO₂ sensor (21); and the detection results provided by the human detection means.

10. The ventilation control system according to claim 9, wherein the electric device is an air conditioner (5), and the control device (22) is configured to receive information on a cooling capacity or a heating capacity, of the air conditioner from the air conditioner.

11. The ventilation control system according to claim 9, wherein the electric device is lighting equipment (7), and the control device (22) is configured to receive information on power consumption of the lighting equipment from the lighting equipment.

12. The ventilation control system according to any one of claims 1 to 11, wherein the control device (22) is configured to control the ventilation device (1) on the basis of a highest CO₂ concentration of a room, the highest CO₂ concentration being highest of the estimated CO₂ concentrations of the plurality of rooms (4a, 4b, 4c).

13. A carbon dioxide concentration estimation method comprising:
a step of measuring, by a CO₂ sensor (21), a CO₂ concentration at a point where flows of exhaust air from a plurality of rooms (4a, 4b, 4c) are mixed together;
a step of receiving, by a control device (22), detection results from a plurality of human detection means to detect presence of an room occupant, the plurality of human detection means each being installed in a corresponding one of the plurality of rooms;
a step of collecting, by the control device, information on a volume of exhaust air discharged from each room of the plurality of rooms; and
a step of estimating, by the control device, a CO₂ concentration of each of the plurality of rooms from the CO₂ concentration measured by the CO₂ sensor, the detection results provided by the human detection means, and the information on the volume of exhaust air discharged from each room of the plurality of rooms.

## Patentansprüche

1. Belüftungssteuersystem (50), das Folgendes umfasst:
eine Belüftungsvorrichtung (1), die betreibbar ist, um eine Vielzahl von Räumen (4a, 4b, 4c) zu belüften, wobei die Belüftungsvorrichtung einen CO₂-Sensor (21) umfasst, der betreibbar ist, um eine CO₂-Konzentration in Abluft zu messen, die aus der Vielzahl von Räumen abgegeben wurde; und
eine Vielzahl von Personendetektionsmitteln, die jeweils in einem entsprechenden aus der Vielzahl von Räumen eingerichtet und betreibbar sind, um die Gegenwart einer sich in dem Raum aufhaltenden Person zu detektieren, wobei
die Belüftungsvorrichtung eine Steuervorrichtung (22) umfasst, **dadurch gekennzeichnet, dass** die Steuervorrichtung (22) ausgelegt ist, um eine CO₂-Konzentration jedes aus der Vielzahl von Räumen basierend auf der durch den CO₂-Sensor gemessenen CO₂-Konzentration, einem Volumen von Abluft, die aus jedem Raum aus der Vielzahl von Räumen abgegeben wurde, und Detektionsergebnissen, die durch die Vielzahl von Personendetektionsmitteln bereitgestellt wurden, zu schätzen.

2. Belüftungssteuersystem nach Anspruch 1, wobei das Personendetektionsmittel ein Personendetektionssensor oder eine Vorrichtung ist, die einen Personendetektionssensor umfasst.

3. Belüftungssteuersystem nach Anspruch 1 oder 2, wobei die Steuervorrichtung (22) ausgelegt ist, um die CO₂-Konzentration jedes aus der Vielzahl von Räumen (4a, 4b, 4c) in Hinblick darauf zu schätzen, dass sich eine sich in dem Raum aufhaltende Person für einen bestimmten Zeitraum in dem Raum aufgehalten hat, nachdem keine sich in dem Raum aufhaltende Person von dem Personendetektionsmittel detektiert wurde.

4. Belüftungssteuersystem nach einem der Ansprüche 1 bis 3, wobei die durch den CO₂-Sensor (21) gemessene CO₂-Konzentration ein Durchschnittswert einer Vielzahl von gemessenen CO₂-Konzentrationswerten ist.

5. Belüftungssteuersystem nach einem der Ansprüche 1 bis 4, wobei die Steuervorrichtung (22) ausgelegt ist, um zu schätzen, dass eine CO₂-Konzentration eines Raums, für den das Personendetektionsmittel keine sich in dem Raum aufhaltende Person detektiert, eine CO₂-Außenkonzentration ist.

6. Belüftungssteuersystem nach einem der Ansprüche 1 bis 4, wobei eine CO₂-Konzentration eines Raums (4b), für den das Personendetektionsmittel keine sich in dem Raum aufhaltende Person detektiert, als voreingestellte CO₂-Konzentration geschätzt wird.

7. Belüftungssteuersystem nach einem der Ansprüche 1 bis 4, wobei die Steuervorrichtung (22) ausgelegt ist, um die CO₂-Konzentration jedes aus der Vielzahl von Räumen (4a, 4b, 4c) als die CO₂-Konzentration zu schätzen, die durch den CO₂-Sensor (21) gemessen wurde, wenn für einen bestimmten Zeitraum in allen aus der Vielzahl von Räumen keine sich in den Räumen aufhaltende Person durch das Personendetektionsmittel detektiert wurde.

8. Belüftungssteuersystem nach einem der Ansprüche 1 bis 7, wobei die Steuervorrichtung (22) ausgelegt ist, um die CO₂-Konzentrationen der Vielzahl von Räumen basierend auf Folgendem zu schätzen: einem voreingestellten Wert des Volumens der Abluft, die aus jedem aus der Vielzahl von Räumen (4a, 4b, 4c) abgegeben wurde; der durch den CO₂-Sensor (21) gemessenen CO₂-Konzentration; und den Detektionsergebnissen, die durch die Personendetektionsmittel bereitgestellt wurden.

9. Belüftungssteuersystem nach einem der Ansprüche 1 bis 7, wobei die Steuervorrichtung (22) ausgelegt ist, um Informationen von einer elektrischen Vorrichtung zu empfangen, die in jedem aus der Vielzahl von Räumen (4a, 4b, 4c) eingerichtet und ausgelegt ist, um die CO₂-Konzentration jedes aus der Vielzahl von Räumen basierend auf Folgendem zu schätzen: dem Volumen von Abluft, die aus jedem Raum aus der Vielzahl von Räumen abgegeben wurde, dem Volumen von Abluft, das basierend auf den empfangenen Informationen geschätzt wurde; der durch den CO₂-Sensor (21) gemessenen CO₂-Konzentration; und den Detektionsergebnissen, die durch die Personendetektionsmittel bereitgestellt wurden.

10. Belüftungssteuersystem nach Anspruch 9, wobei die elektrische Vorrichtung eine Klimaanlage (5) ist, und die Steuervorrichtung (22) ausgelegt ist, um Informationen zu einer Kühlkapazität oder einer Heizkapazität der Klimaanlage von der Klimaanlage zu empfangen.

11. Belüftungssteuersystem nach Anspruch 9, wobei die elektrische Vorrichtung eine Beleuchtungsanlage (7) ist, und die Steuervorrichtung (22) ausgelegt ist, um Informationen zum Stromverbrauch der Beleuchtungsanlage von der Beleuchtungsanlage zu empfangen.

12. Belüftungssteuersystem nach einem der Ansprüche 1 bis 11, wobei die Steuervorrichtung (22) ausgelegt ist, um die Belüftungsvorrichtung (1) basierend auf der höchsten CO₂-Konzentration eines Raums zu steuern, wobei die höchste CO₂-Konzentration die höchste aus den geschätzten CO₂-Konzentrationen der Vielzahl von Räumen (4a, 4b, 4c) ist.

13. Kohlendioxidkonzentrations-Schätzungsverfahren, das Folgendes umfasst:
einen Schritt des Messens einer CO₂-Konzentration zu einem Zeitpunkt, an dem Ströme von Abluft aus einer Vielzahl von Räumen (4a, 4b, 4c) zusammengemischt werden, durch einen CO₂-Sensor (21);
einen Schritt des Empfangens von Detektionsergebnissen von einer Vielzahl von Personendetektionsmitteln durch eine Steuervorrichtung (22), um die Gegenwart einer sich in einem Raum aufhaltenden Person zu detektieren, wobei die Vielzahl von Personendetektionsmitteln jeweils in einem entsprechenden aus der Vielzahl von Räumen eingerichtet ist;
einen Schritt des Sammelns von Informationen zu einem Volumen von Abluft, die aus jedem Raum aus der Vielzahl von Räumen abgegeben wurde, durch die Steuervorrichtung; und
einen Schritt des Schätzens einer CO₂-Konzentration jedes aus der Vielzahl von Räumen ausgehend von der durch den CO₂-Sensor gemessenen CO₂-Konzentration, den Detektionsergebnissen, die von den Personendetektionsmitteln bereitgestellt wurden, und den Informationen zu dem Volumen von Abluft, die aus jedem Raum aus der Vielzahl von Räumen abgegeben wurde, durch die Steuervorrichtung.

## Revendications

1. Système de commande de ventilation (50) comprenant :
un dispositif de ventilation (1) pouvant fonctionner pour ventiler une pluralité d'espaces (4a, 4b, 4c), le dispositif de ventilation incluant un capteur de CO₂ (21) pouvant fonctionner pour mesurer une concentration de CO₂ dans de l'air évacué à partir de la pluralité d'espaces ; et
une pluralité de moyens de détection d'être humain installés chacun dans une correspondante de la pluralité de pièces et pouvant fonctionner pour détecter la présence d'un occupant de pièce, dans lequel
le dispositif de ventilation inclut un dispositif de commande (22) **caractérisé en ce que** le dispositif de commande (22) est configuré pour estimer une concentration de CO₂ de chacune de la pluralité de pièces sur la base de la concentration de CO₂ mesurée par le capteur de CO₂, d'un volume d'air évacué à partir de chaque pièce de la pluralité de pièces, et de résultats de détection fournis par la pluralité de moyens de détection d'être humain.

2. Système de commande de ventilation selon la revendication 1, dans lequel le moyen de détection d'être humain est un capteur de détection d'être humain ou un dispositif incluant un capteur de détection d'être humain.

3. Système de commande de ventilation selon la revendication 1 ou 2, dans lequel le dispositif de commande (22) est configuré pour estimer la concentration de CO₂ de chacune de la pluralité de pièces (4a, 4b, 4c), en ce qui concerne un occupant de pièce étant présent pendant une certaine période de temps après qu'aucun occupant de pièce n'ait été détecté par le moyen de détection d'être humain.

4. Système de commande de ventilation selon l'une quelconque des revendications 1 à 3, dans lequel la concentration de CO₂ mesurée par le capteur de CO₂ (21) est une valeur moyenne d'une pluralité de valeurs de concentration de CO₂ mesurées.

5. Système de commande de ventilation selon l'une quelconque des revendications 1 à 4, dans lequel le dispositif de commande (22) est configuré pour estimer qu'une concentration de CO₂ d'une pièce pour laquelle le moyen de détection d'être humain ne détecte aucun occupant de pièce est une concentration de CO₂ extérieure.

6. Système de commande de ventilation selon l'une quelconque des revendications 1 à 4, dans lequel une concentration de CO₂ d'une pièce (4b) pour laquelle le moyen de détection d'être humain ne détecte aucun occupant de pièce est estimé être une concentration de CO₂ prédéfinie.

7. Système de commande de ventilation selon l'une quelconque des revendications 1 à 4, dans lequel le dispositif de commande (22) est configuré pour estimer la concentration de CO₂ de chacune de la pluralité de pièces (4a, 4b, 4a) comme étant la concentration de CO₂ mesurée par le capteur de CO₂ (21) lorsqu'aucun occupant de pièce n'a été détecté par le moyen de détection d'être humain pendant une certaine période de temps dans la totalité de la pluralité de pièces.

8. Système de commande de ventilation selon l'une quelconque des revendications 1 à 7, dans lequel le dispositif de commande (22) est configuré pour estimer les concentrations de CO₂ de la pluralité de pièces sur la base :
d'une valeur prédéfinie du volume d'air évacué à partir de chacune de la pluralité de pièces (4a, 4b, 4c) ; de la concentration de CO₂ mesurée par le capteur de CO₂ (21) ; et
des résultats de détection fournis par le moyen de détection d'être humain.

9. Système de commande de ventilation selon l'une quelconque des revendications 1 à 7, dans lequel le dispositif de commande (22) est configuré pour recevoir des informations à partir d'un dispositif électrique installé dans chacune de la pluralité de pièces (4a, 4b, 4c), et est configuré pour estimer la concentration de CO₂ de chacune de la pluralité de pièces sur la base : du volume d'air évacué à partir de chaque pièce de la pluralité de pièces, le volume d'air évacué étant estimé sur la base des informations reçues ; de la concentration de CO₂ mesurée par le capteur de CO₂ (21) ; et des résultats de détection fournis par le moyen de détection d'être humain.

10. Système de commande de ventilation selon la revendication 9, dans lequel le dispositif électrique est un climatiseur (5), et le dispositif de commande (22) est configuré pour recevoir des informations sur une capacité de refroidissement ou une capacité de chauffage du climatiseur à partir du climatiseur.

11. Système de commande de ventilation selon la revendication 9, dans lequel le dispositif électrique est un équipement d'éclairage (7), et le dispositif de commande (22) est configuré pour recevoir des informations sur la consommation de puissance de l'équipement d'éclairage en provenance de l'équipement d'éclairage.

12. Système de commande de ventilation selon l'une quelconque des revendications 1 à 11, dans lequel le dispositif de commande (22) est configuré pour commander le dispositif de ventilation (1) sur la base d'une concentration de CO₂ la plus élevée d'une pièce, la concentration de CO₂ la plus élevée étant la plus élevée des concentrations de CO₂ estimées de la pluralité de pièces (4a, 4b, 4c).

13. Procédé d'estimation de concentration de dioxyde de carbone, comprenant :
une étape de mesure, par l'intermédiaire d'un capteur de CO₂ (21), d'une concentration de CO₂ en un point où des écoulements d'air évacué à partir d'une pluralité de pièces (4a, 4b, 4c) sont mélangés ensemble ;
une étape de réception, par l'intermédiaire d'un dispositif de commande (22), de résultats de détection provenant d'une pluralité de moyens de détection d'être humain pour détecter la présence d'un occupant de pièce, chacun de la pluralité de moyens de détection d'être humain étant installé dans une correspondante de la pluralité de pièces ;
une étape de collecte, par l'intermédiaire du dispositif de commande, d'informations sur un volume d'air évacué à partir de chaque pièce de la pluralité de pièces ; et
une étape d'estimation, par l'intermédiaire du dispositif de commande, d'une concentration de CO₂ de chacune de la pluralité de pièces à partir de la concentration de CO₂ mesurée par le capteur de CO₂, des résultats de détection fournis par le moyen de détection d'être humain, et des informations sur le volume d'air évacué à partir de chaque pièce de la pluralité de pièces.
